# EUROPEAN PATENT APPLICATION

(11) **EP 1 990 090 A1**
(43) Date of publication of application: **12.11.2008**
(21) Application number: 07714976.3
(22) Date of filing: 27.02.2007
(51) Int. Cl.: B01J 19/24, B01J 19/00, B01J 31/22, B01J 35/02

(54) **MICROCHANNEL REACTOR**

(30) Priority: 02.03.2006 JP 2006056193
(71) Applicant: Inter-University Research Institute Corporation National Institutes of Natural Sciences, Mitaki-shi, Tokyo 181-8588 (JP)
(72) Inventor: UOZUMI, Yasuhiro c/o Research Center for Molecular-scale Nanoscience, 5-1, Aza Higashiyama, Myodaijicho, Okazaki-shi, Aichi 444-8787 (JP); YAMADA, Yoichi c/o Research Center for Molecular-scale Nanoscience, 5-1, Aza Higashiyama, Myodaijicho, Okazaki-shi, Aichi 444-8787 (JP); FUKUYAMA, Naoshi c/o Research Center for Molecular-scale Nanoscience, 5-1, Aza Higashiyama, Myodaijicho, Okazaki-shi, Aichi 444-8787 (JP); BEPPU, Tomohiko c/o Research Center for Molecular-scale Nanoscience, 5-1, Aza Higashiyama, Myodaijicho, Okazaki-shi, Aichi 444-8787 (JP); KITAMORI, Takehiko, Tokyo 113-0033 (JP); UENO, Masaharu, Tokyo 120-0031 (JP)
(74) Representative: Prüfer & Partner GbR European Patent Attorneys
(86) International application number: PCT/JP2007/053583
(87) International publication number: WO 2007/099932

(57) **Abstract**

The present invention provides a microchannel reactor that is used as a new reaction device capable of greatly expanding the utilization range of chemical reactions occurring in microspaces.

A solution of a soluble linear polymer containing ligands and a solution of a soluble transition metal molecule are individually introduced into a microreactor, the flows are merged inside a microchannel and a metal polymer membrane of a complex formed is generated at the interface of the flows. The membrane is used as a solid catalyst, and various reactions such as carbon-carbon bond formation reactions, oxidation reactions and the like can be conducted at extremely fast reaction rates.

## Description

### Field of the Invention

The present invention relates to a microchannel reactor and more particularly to a microchannel reactor having a polymer membrane with a catalytic function in a flow merge zone comprising at least two in-flow routes and at least one out-flow route.

### Prior Art

The integrated technology used to conduct a chemical reaction in the microspaces inside microchannels attracted attention from the perspective of high speed chemical reactions, reactions involving trace amounts, on-site analyses and the like. Research in this area is being aggressively pursued globally. Chemical reactions occurring in microspaces present many hidden potentials, and further integration, miniaturization and diversification are anticipated in the scope of utilization and reaction devices.

Catalytic reactions inside microreactors were previously investigated by many, but immobilization and high reactivity were difficult to achieve simultaneously. Recent improvements allowed Haswell et al to conduct a Suzuki-Miyaura reaction of an aryl halide and an aryl boronic acid using a palladium catalyst immobilized on silica gel under an electric potential (200V) (Reference 4). However, this reaction required twenty-five minutes, and the yield was as low as 67%. More recently, Organ et al were able to conduct a Suzuki-Miyaura reaction of an aryl halide and an aryl boronic acid in two to thirty minutes of reaction time using a soluble (homogeneous) palladium catalyst and 100 to 170W of microwave energy (Reference 5). However, the palladium catalyst in this reaction was soluble and could not be immobilized inside a microreactor. In addition, microwave energy was an essential element and limited the universal appeal of this approach. Kobayashi et al. immobilized palladium in the form of a palladium catalyst on the surface of micropipes inside a microreactor and conducted an alkene hydrogenation (Reference 6). The corresponding alkane was obtained in two minutes of reaction time, but a large excess of hydrogen needed to be used. Efforts have been made to increase the contact area of the two phases and to bring about efficient mixing by developing and using micromixers targeted at improving reactivity, by packing the flow route with solid phase beads supporting an enzyme catalyst (Reference 7), by generating a vortex flow upon installing rectangular protrusions on the bottom of the flow route (Reference 8) and the like with no success in solving the problem of low reactivity. In addition, all of the options described above had the problem of not being able to separate the product and reaction reagents using the microreactor.
The introduction of a metal catalyst and the like in microchannels for various reactions has been proposed by many, but such metal catalysts are most commonly used while immobilized on the microchannel inner walls (References 1, 2 etc.).

The inventors already provided a microchannel construction with a functional polymer membrane inside the microchannel by preparing solutions with starting reactants A and B and allowing these solutions to flow through two microflow paths and to merge inside the microchannel so that the functional polymer membrane is formed through interfacial polymerization reaction (Reference 3). But this technology had some problems, such as it necessitated preparation of the polymer membrane using interfacial polymerization reaction, the introduction of a metal catalyst was difficult and the preparation of an immobilized catalyst with a high catalytic activity was difficult.

Reference 1: Japanese Patent Application Public Disclosure No.2005-144337
Reference 2: Japanese Patent Application Public Disclosure No.2005-529950 (WO2003/106386)
Reference 3: W02002/075324
Reference 4: Sens. Actuators, B 2000, 63, 153
Reference 5: J. Am. Chem. Soc. 2005, 127, 8160
Reference 6: Science 2004, 304, 1305
Reference 7: J. Am. Chem. Soc. 2002, 124, 13360
Reference 8: Science, 2002, 295, 647

### Problems to be solved by the Invention

The present invention provides a technology to create a new solid catalyst inside a microchannel, which shows much higher reactivity than the current catalyst, and a new reactor equipped with a functional polymer membrane which can show a unique function in a microspace such as a selective separation membrane, and a new technology to realize a microchannel reactor that can significantly expand the utility range of chemical reactions in microspaces.

### Means to Solve the Problems

The inventors prepared a solution of a soluble linear polymer containing ligands and a solution of soluble transition metal molecules, and introduced these solutions into a microreactor and allowed to merge inside the microchannel, then a metal polymer membrane was formed at the interface. The inventors conducted a carbon-carbon bond forming reaction, an oxidation reaction and the like by using the microreactor, and discovered that these reactions proceeded at a significantly fast rate.

That is, the present invention is a microchannel reactor comprising a merge zone which has at least two in-flow routes and at least one out-flow route, wherein the microchannel reactor has a polymer membrane which comprises a complex formed from a polymer ligand and a transition metal molecule at the interface of the in-flow routes in the merge zone, and the complex has a catalytic function.
The polymer membrane is preferably formed by introducing a solution of the polymer ligand into one of the in-flow routes and a solution of the transition metal molecule into the other of the in-flow routes.
The present invention is also a method for producing a catalytic reaction product comprising introducing reactants into the in-flow routes of the microchannel reactor.

### Advantages of the Invention

In the microchannel reactor of the present invention, the membrane of a complex of an insoluble metal and a polymer formed by utilizing laminar flow has a structure in which a linear polymer is crosslinked with a metal, and has broad ranges of molecular weight and physical dimension. When these catalysts were prepared in a conventional flask, the molecular weight and physical dimensions were difficult to control. However, laminar flow within a microflow route acts to regulate the location and direction of the complex formed, a complex may be formed at the interface of two liquid phases, and the complex may extend in the form of a film aligned with the flow of the liquid phase.
Therefore, the microchannel reactor of the present invention can realize an effective catalytic reaction in far shorter time than conventional reactors with microchannels, that is, the reaction occurs at a much faster reaction rate. Furthermore, the reaction product can be efficiently separated from nonessential by-products.

### Brief Description of the Drawings

Figure 1 shows an example of the microchannel reactor of the present invention. A polymer ligand solution (reactant A) and a transition metal molecule solution (reactant B) are merged in the merge zone, and a polymer membrane is formed at the interface. When the reactor is used as a reaction device, reactants A and/or B are injected and a reaction occurs at the polymer membrane as the reaction site. The reaction product is discharged from the out-flow route.
Figure 2 shows an optical microscope photograph of a microchannel reactor taken from above. A polymer membrane with a film thickness of 2 µm to 5 µm and about 5 cm long is formed at the interface in the merge zone (the white line extending left and right).
Figure 3 shows an energy dispersing type X ray analysis (EDS) spectrum of the polymer membrane.
Figure 4 shows a cross sectional view of the microreactor taken using a scanning microscope. The cross sectional view of the merge zone vicinity is shown, and a vertical white polymer membrane is seen in the center.
Figure 5 shows a optical microscope photograph of the microreactor taken from above. The microchannel is curved, and a merge zone in the photograph is positioned left and right. A polymer membrane extends from the merge zone.
Figure 6 shows an enlargement of Figure 5. A polymer membrane is seen in the center.

### Detailed Description of the Invention

The microchannel reactor of the present invention is characterized by the presence of a polymer membrane with a catalytic function formed at the flow interface in the merge zone of microchannel flow routes in contrast to similar conventional reactors in which the catalyst was fixed on the wall surface of microchannels.

### (References 1, 2 etc)

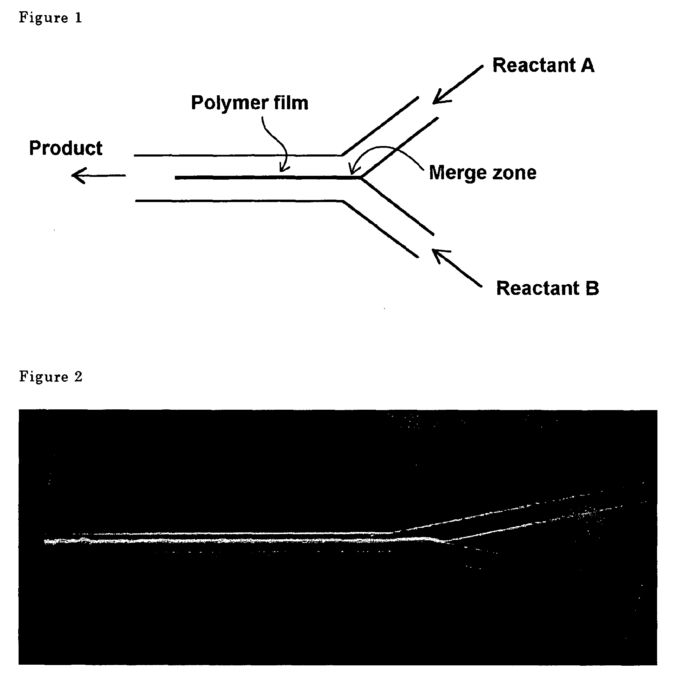

The polymer membrane is formed at the interface in the merge zone of in-flow routes in a microchannel as illustrated in Figure 1 and does not cover the wall surface in a microchannel. The polymer membrane has one end attached to a wall surface, and the attachment allows the polymer membrane to remain in the merge zone. However, the majority of the polymer membrane is separated from the wall surface. A transition metal with a catalytic function is dispersed inside the polymer membrane. Therefore, the polymer membrane with a catalytic function comes in extremely close contact with the solvent containing reactants introduced from the in-flow routes when this reactor is used as a reaction device. The reactants injected from the in-flow routes impregnate the polymer membrane from one side or both sides, and the polymer membrane is thought to become the reaction site where the reaction takes place. A reaction can be conducted with extremely good efficiency since such a special reaction site is presented.

The microchannel reactors are obtained by processing microchannels that are, for example, 500 µm wide or narrower and 300 µm deep or shallower on a substrate made of glass, ceramics, resins and the like. The microchannels are positioned optionally on a flat surface or in a three dimensional pattern.
The microchannel reactor contains a merge zone comprising at least two, preferably two, in-flow routes and at least one, preferably one, out-flow route.
As described later, a solution of a polymer ligand is introduced into either one of said in-flow routes and a solution of a transition metal molecule is introduced into the other in-flow route when preparing a polymer membrane of the present invention, the flows are allowed to merge in the merge zone and a polymer membrane is formed at the interface. Reactants are introduced from optionally selected in-flow routes depending on the number of reactants and whether they were mixed prior to the reaction when this microchannel reactor is used as the reaction device. After the reaction, the products are discharged from the out-flow route.

The interface in the merge zone contains a polymer membrane as described above.
The polymer membrane is obtained by forming a complex of a polymer ligand and a transition metal molecule and has a catalytic function.
The "polymer ligand" contains, as the main chain polymer, polyacrylamide, poly(acrylate ester), polystyrene, polybiologen or their copolymers and contains a ligand with organic phosphorus or organic nitrogen directly on the side or main chain of the main chain polymer.
As the polymer ligand, a copolymer, preferably of a monomer containing ligands of phosphine, pyridine, pyridinium, alkyl ammonium and hydrophobic segments such as monomers containing alkyl groups or aryl groups, a hydrophilic monomer having affinity to a silicon carrier such as glass, silicon and the like or a resin carrier such as polyacrylamide, poly(acrylate ester), polystyrene, polybiologen and the like and a hydrophilic monomer preferably containing as a silicon-friendly group an organic quaternary nitrogen such as N-alkylacrylamide, a pyridinium salt, an ammonium salt and the like, may be used.

As the "transition metal", late period transition metals and chromium group metals, preferably palladium, nickel, platinum, ruthenium, rhodium, indium, tungsten, molybdenum and chromium, may be cited, The late period transition metals have affinity toward phosphine and pyridine, and chromium group metals have excellent affinity toward pyridinium salts and ammonium salts. The "transition metal molecule" refers to transition metal salts or transition metal complexes and is used in the following forms.
(1) Late period transition metal salts: Chlorides, carboxylates, carbonates, phosphates, sulfates, nitrates, bromides, iodides and the like may be cited.
(2) Late period transition metal complexes: Alkene complexes, alkyne complexes, organic phosphorus complexes, organic arsenic complexes, dibenzylidene acetone complexes, carbonyl complexes and the like may be cited.
(3) Chromium group metal salts: Carboxylate salts, carbonate salts, phosphate salts, sulfate salts, nitrate salts, bromides, iodides and the like may be cited.
(4) Salts of chromium group metal acids with other acids: Chromium group metal acids refer to tungstic acid (H₂WO₄), molybdic acid (H₂MoO₄) and chromic acid (H₂CrO₄). Phosphoric acid (H₃PO₄), sulfuric acid (H₂SO₄), boric acid (H₃BO₃) and silicic acid (H₄SiO₄) may be cited as other acids. Phosphorus tungstic acid (H₃PW₁₂O₄₀), phosphorus molybdic acid (H₃PMo₁₂O₄₀), tungsten boric acid (H₃BW₁₂O₃₉), molybdic boric acid (H₃PMo₁₂O₃₉), tungstic silicic acid (H₄SiW₁₂O₄₀), molybdic silicic acid (H₄SiMo₁₂O₄₀) and the like may be cited as the salts of chromium group acid with other acids.
(5) Salts of (4) salts: For example, lithium salts, sodium salts, potassium salts, rubidium salts, cesium salts, magnesium salts, calcium salts, barium salts, ammonium salts and the like may be cited.

The "complex" formed refers to the metal complexes formed by bonding the ligand of the polymer ligand described above and the metal in the transition metal molecule described above through a coordinating bond, ionic bond or covalent bond.

The "catalytic function" refers, for example, to the function that catalyzes the following reactions.
(1) Catalytic functions of late period metals: Cross coupling reactions of halogenated aryl halides, alkenyl halides or alkyl halides with aryl borates, alkenyl borates or alkyl borates; cross coupling reactions of alkenyl halides or alkyl halides with aryl metal reagents, alkenyl metal reagents or alkyl metal reagents; homo-coupling reactions of halogenated aryl halides, alkenyl halides or alkyl halides; and coupling reactions of halogenated aryl halides, alkenyl halides or alkyl halides with alkenes or alkynes may be cited.
(2) Catalytic functions of chromium group metals: Oxidation of alcohols, thiols and amines, oxidative cyclization reactions of alkenols and alkynols, epoxidation of alkenes, diol formation of alkenes, hydration reactions, ring opening reactions of cyclic ethers, Diels-Alder reactions, Prince reactions and Friedel-Crafts reactions may be cited.

The complexes described below can be cited as preferred complexes of the polymer ligand and the transition metal such as those described above.
1) Polymer-late period transition metal complexes represented by the formula below (Japanese Patent Application Public Disclosure No. 2005-47864) 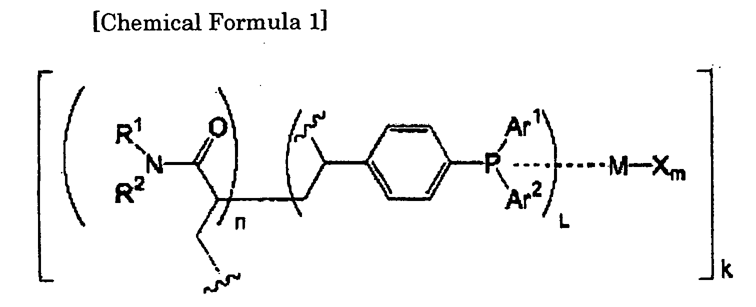 In the formula, k, L aud n are each independently integers of at least one, m is an integer greater than zero, M is selected from transition metals that include palladium, nickel, ruthenium, rhodium, indium and platinum: R¹ and R² are each independently selected from hydrogen, methyl group, ethyl group, propyl group, isopropyl group, butyl group, isobutyl group, t-butyl group, hexyl group, cyclohexyl group, phenyl group and benzyl group; X is selected from chlorine, acetate, carbon monoxide, acetonitrile, benzonitrile, acetylacetone and triphenyl phosphine; Ar¹ and Ar² are each independently a phenyl group or a naphthyl group that may contain methyl groups, ethyl groups, propyl groups, isopropyl groups, butyl groups, isobutyl groups, and t-butyl groups.

The palladium catalyst that is a typical example is a palladium super molecule complex with a network shape obtained by a reaction of a linear copolymer of the N-substituted amido-4-styryl(diphenyl) phosphine shown in the formula below and palladium. 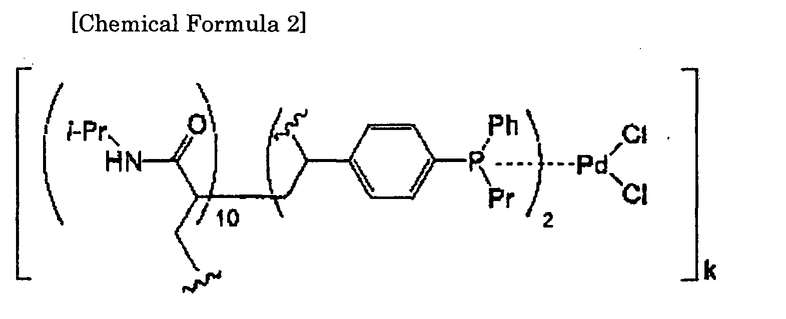 The palladium super molecule complex is amphiphilic and is a network-shaped super molecule complex with palladium forming bonds between polymers as a crosslinking agent.

2) Chromium group catalyst type complex represented by the formula below (-NR¹¹R¹²-R¹⁵-NR¹³R¹⁴-R¹⁶-)ₘM¹¹ₙ
   In the formula, R¹¹-R¹⁴ each independently represent aryl groups or alkyl groups with the exception that NR¹¹R¹² and NR¹³R¹⁴ may also form pyridine, acridine or quinoline rings that may contain substituents, R¹⁵ represents an arylene group or alkylene group that may contain substituents, R¹⁶ represents an alkylene group, M¹¹ represents a chromium group metal salt or a salt of a chromium group metal acid and another acid or its salt, m represents a number corresponding to the molecular weight of the polymer and n represents a number that satisfies m/n=1-10.
   As one example of the complex, a complex represented by the formula below may be cited. 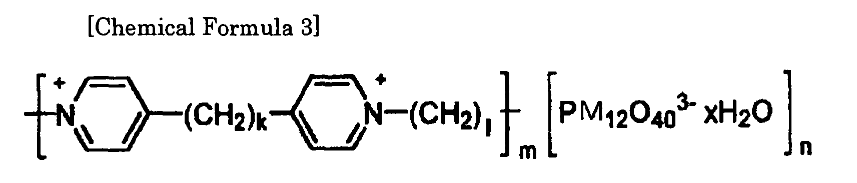 In the formula, k represents a number corresponding to R¹⁵ described above, 1 represents a number corresponding to R¹⁶ described above, m and n represent as described above, M represents a chromium group metal and x represents the amount of coordinated water between zero and fifty. The pyridine ring may also contain substituents.

3) Tungstic acid type complex (Japanese Patent Application Public Disclosure No. 2003-33659) represented by the formula below 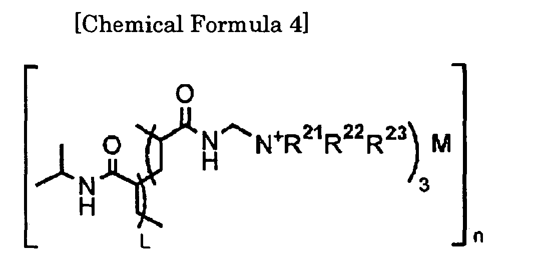 In the formula, L, m and n are each independently integers one or greater, x is selected from alkyl groups with at least one carbon atom or benzyl groups, R²² and R²³ are each independently alkyl groups with at least one carbon atom and may be identical and metal M is a tungstic acid compound such as PW₁₂O₄₀ and the like.
   As an example of the complex, (3-acrylamido)(dodecyl)dimethyl ammonium bromide and N-isopropyl acrylamide are allowed to polymerize. Then poly(N-isopropyl acrylamide) derivative is obtained and a linear copolymer is subsequently obtained by replacing the bromide ion with nitrate ion. The linear copolymer obtained is dissolved in water, and an aqueous solution of phosphorus tungstic acid is added and agitated. By filtering and drying the precipitate formed, a tungsten catalyst is obtained, which is a network shaped super molecule complex formed by the phosphorus tungstic acid acting as a crosslinking agent to create bonds between polymers.

A polymer ligand solution is introduced from one of the in-flow routes in a microchannel reactor and a transition metal molecule solution is introduced from the other in-flow route to form a polymer membrane. The two solutions are allowed to merge in a merge zone. As a result, a polymer membrane is formed at the interface between the solutions in the merge zone.. That is, the "interface in the merge zone" refers to an interface formed in the merge zone between the solutions when almost equal amounts of fluids are introduced from two different in-flow routes to create a laminar flow.

Highly polar solvents are preferred for the solvents used for these solutions. For example, water, methanol, ethanol, propanol, 2-propanol, t-butanol, ethyl acetate, methyl acetate, propyl acetate, dimethyl formamide, dimethyl acetamide, dimethyl sulfoxide and the like may be cited.
Ethyl acetate and 2-propanol are preferred as the solvent for polymer ligand solutions.
Water is preferred as the solvent for transition metal molecule solutions.
In addition, the polymer ligand concentration in the polymer ligand solution is around 5 mM.
The transition metal molecule concentration in the transition metal molecule solution is around 1.7 mM.
The solutions are introduced at a flow rate of around 25 µL/minute so that both solutions are in a laminar flow in the merge zone and a stable interface is formed.
As a result, a polymer membrane is formed at the interface of the solutions while the polymer ligand in the polymer ligand solution is partially adhering to the wall surface in the merge zone. The polymer ligands are partially crosslinked by the transition metal in the transition metal molecule solution two form a more solid polymer membrane.
A polymer-metal complex membrane is formed when a complex is formed by bonding the ligand segment of the polymer with the metal in the interface (the former by a coordinate bond and the latter by an ionic bond) and the metal also acts as a crosslinking agent. Furthermore, a stable membrane is immobilized on a support such as silicon when the hydrophilic polymer segment of the complex is adsorbed on a support material such as silicon, and a polymer membrane with a catalytic function immobilized on, for example, a microreactor is thought to be prepared in this manner.
The Examples below illustrate the present invention, but the Examples are not intended to limit the scope of the present invention.

### Example 1

Bis(4-Pyridyl) propane (manufactured by Tokyo Kasei Kogyo, 5 mmoles) and dibromooctane (manufactured by Tokyo Kasei Kogyo, 5 mmoles) were agitated for twenty-four hours in acetonitrile at 82°C. Precipitate was formed when the reaction solution was cooled. The product was washed with ether and dried. A quantitative yield (5 mmoles) of poly[1-(4-octyl pyridinium bromido)-3-(4-pyridinium bromido) propane] was obtained.
¹H NMR (CD₃OD) 8.91 (d, J=6.7Hz, 4H), 8.04 (d, J=6.7Hz, 4H), 4.60 (t, J=7.9Hz, 4H), 3.08 (t, J=7.9Hz, 4H), 2.21 (m, 2H), 2.01 (m, 4H), 1.42 (m, 8H)
¹³C NMR (CD₃OD) 162.0, 145.3, 129.4, 62.3, 35.8, 32.3, 30.3, 29.7, 27.0

A microflow device (manufactured by Micro Kagaku Giken) constructed from a glass sheet 3 cm long, 7 cm wide and 0.7 mm thick with an X shaped groove 0.1 mm wide, 0.04 mm deep, 14 cm long in a serpentine path paired with a glass sheet 3 cm long was used.
Two liquid phases, one of water and one of ethanol, were allowed to flow at a flow rate of 20 microliters per minute to create a laminar flow condition inside the microflow route. The liquid phases were switched to an aqueous 12-tungsten phosphoric acid solution (manufactured by Wako Junyaku Kogyo) (6.7 mM) and an ethanol solution (10 mM) of the poly[1-(4-octyl pyridinium bromido)-3-(4-pyridinium bromido) propane] obtained above. When the flow rate was 25 microliters per minute and the solutions were introduced into the microreactor for fifteen minutes, the insoluble tungsten ampiphilic polymer complex represented by the formula below was prepared in the form of a film in the interface. 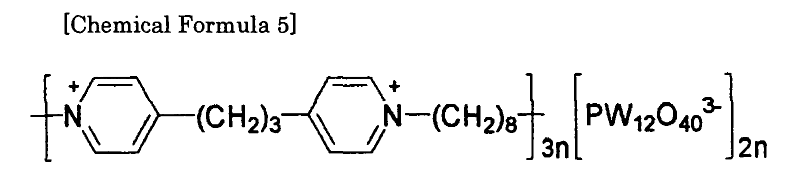 CP MS ³¹P NMR (solid)-16.5 ppm, Elemental analysis Calculated: C 11.30%, H 1.43%, N 1.25, Observed: C 12.79%, H 1.73%, N 1.33
An optical microscope photograph taken from above the merge zone vicinity in the microchannel reactor is shown in Figure 2. The formation of a polymer-tungsten film at the interface in the merge zone was confirmed.

### Example 2

In this example, the oxidative cyclization reaction of the equation below was allowed to occur using the polymer-tungsten film obtained in Example 1. 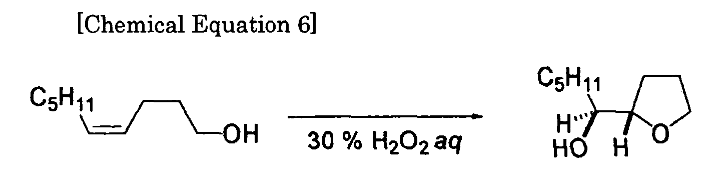 After the complex formation of Example 1, the same microchannel reactor was used to switch the liquid phases flowing in the flow routes to 30% aqueous hydrogen peroxide and an ethanol solution.(0.1 M) of cis-4-decen-1-ol (manufactured by Tokyo Kasei Kogyo), respectively. A reaction proceeded in eighteen seconds when the flow rates were 0.1 microliters per minute, and the target material, 1-(tetrahydrofuran-2-yl)-hexan-1-ol, was obtained in 40% yield based on gas chromatography
¹H NMR (CDCl₃) δ : 0.89 (t, d=6.7Hz, 2H), 1.26-1.63 (m, 9H), 1.89-1.95 (m, 3H), 2.52 (br s, 1H), 3.39-3.41 (m, 1H), 3.70-3.84 (m, 3H)
Now, when this reaction was attempted using a flask, the reaction did not take place in eighteen seconds (0% yield) indicating the extremely high reactivity achieved inside a microreactor of the present invention.

### Example 3

4-Styryl (diphenyl) phosphine (manufactured by Wako Junyaku Kogyo), 1.34 g, and N-isopropyl acrylamide (manufactured by Sigma Aldrich), 3.15 g, were dissolved in 50 ml of butanol, and 16.4 mg of azo-bis-isobutyronitrile was added to the solution. The solution was agitated for forty-one hours at 75°C, and precipitate was formed using methylene chloride-diethyl ether. The precipitate was purified and dried to obtain poly[4-styryl (diphenyl) phosphine-isopropyl acrylamide] in 82% yield.
¹H NMR (CDCl₃ with a trace amount of D₂O) 1.12 (60H), 1.64-1.78 (20H), 2.10 (10H), 3.98 (10H), 7.00-7.64(28H) all broad peaks
¹³C NMR (CDCl₃) 22.6, 41.3, 42.4, 128.3, 128.5, 133.4, 133.6, 174.2 ³¹P NMR (CDCl₃) -3.0

The microchannel device used in Example 1 was used to form laminar flows in the microflow route from two liquid phases, one of water and one of ethyl acetate, at a flow rate of twenty microliters per minute. The liquid phases were switched to an aqueous ammonium tetrachloropalladium acid (1.7 mM) and an ethyl acetate solution (5 mM) of the poly[4-styryl (diphenyl) phosphine-isopropyl acrylamide] copolymer obtained above, respectively, and were introduced into the microreactor at rates of twenty-five microliters per minute for ten minutes. The insoluble metal-ampiphilic polymer complex represented by the formula below was formed in the interface. 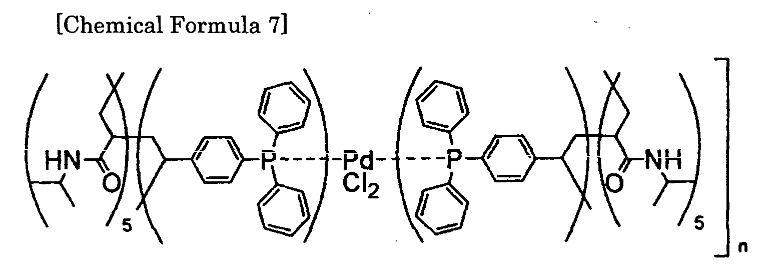 IR : 3285, 3061, 2971, 2973, 2874, 1651, 1460, 1387, 1366, 1175, 1119, 1096, 69 4, 523 (cm⁻¹) ; CP MS ³¹P NMR (solid) 26 ppm, 33 ppm

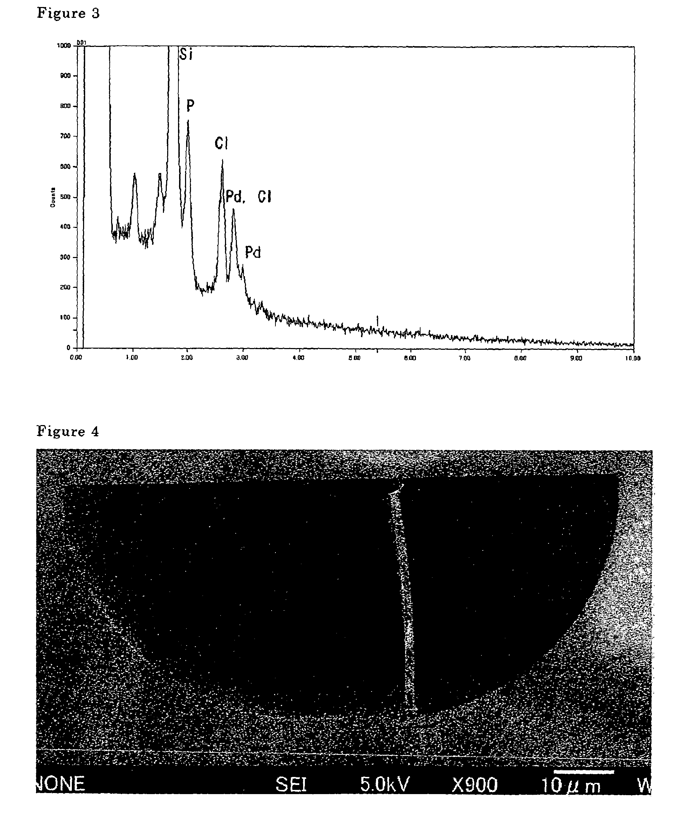

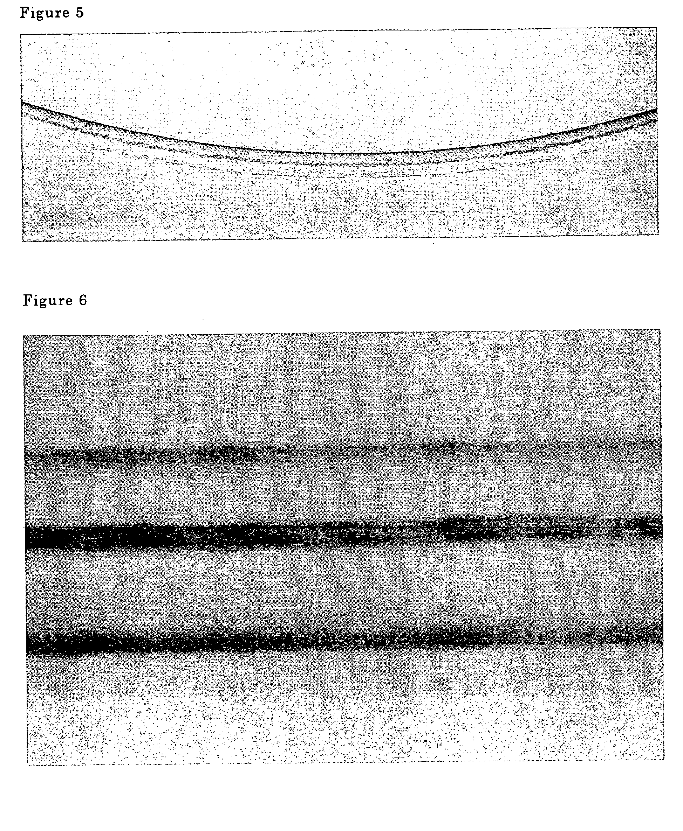

Based on the results of the energy dispersing X ray analysis (EDS) of the product shown in Figure 3, the presence of silicon, phosphorus, chlorine and palladium on the substrate was indicated.
A cross sectional view of a microreactor taken with a scanning microscope is shown in Figure 4. The vertical white line in the center of Figure 4 indicates a polymer membrane, and the black semicircle surrounding the line indicates the space in the microreactor. The photograph confirmed that the polymer membrane thickness was 1.4 µm (the width of the white line left to right) and the height was 40 µm (up and down length of the white line).
Photographs of the microreactor taken from above with an optical microscope are shown in Figures 5 and 6. The thin line in the center of the flow routes in the microreactor extending left and right represents a polymer membrane. The membrane was about 14 cm long.

### Example 4

The Suzuki-Miyaura reaction shown by the equation below was allowed to occur in this example using the polymer-palladium film obtained in Example 3. 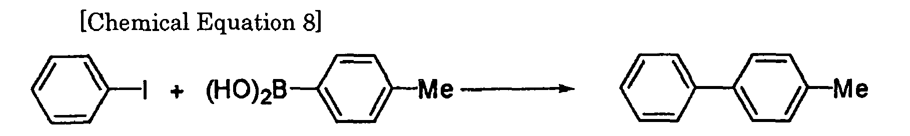 After the complex of Example 3 was formed, the same microchannel reactor was used to switch the liquid phases flowing in the flow routes to an aqueous solution containing 4-methylphenyl boronic acid (manufactured by Wako Junyaku Kogyo) and sodium carbonate and a 2-propanol solution of iodobenzene (manufactured by Tokyo Kasei Kogyo). A reaction progressed when the aqueous solution was allowed to flow at a flow rate of five microliters per minute and the 2-propanol solution was allowed to at a flow rate of 2.5 microliters, and gas chromatographic analysis indicated that 4-methylbiphenyl, the target material, was prepared in 100% yield. The reaction time was four seconds. GC-MS(+): 168(M+, base peak), 152, 139, 128, 115, 102, 91, 82, 63, 51, 39
When this reaction was conducted in a flask, no reaction proceeded in a reaction time of four seconds. (The yield was zero percent.)
The reactivity was extremely high in this example when compared to the Suzuki-Miyaura reaction conducted according to a conventional method.

## Claims

1. A microchannel reactor comprising a merge zone which has at least two in-flow routes and at least one out-flow route, wherein the microchannel reactor has a polymer membrane which comprises a complex formed from a polymer ligand and a transition metal molecule at the interface of the in-flow routes in the merge zone, and the complex has a catalytic function.

2. The microchannel reactor of claim 1, wherein the polymer membrane is formed by introducing a solution of the polymer ligand into one of the in-flow routes and a solution of the transition metal molecule into the other of the in-flow routes.

3. A method for producing a catalytic reaction product comprising introducing reactants into the in-flow routes of the microchannel reactor of claim 1 or 2.
